# EUROPÄISCHE PATENTSCHRIFT

(11) **EP 1 419 114 B1**
(45) Veröffentlichungstag und Bekanntmachung des Hinweises auf die Patenterteilung: **15.08.2007**
(21) Anmeldenummer: 02762247.1
(22) Anmeldetag: 21.08.2002
(51) Int. Cl.: C02F 11/14, F23G 5/02, B03B 9/06

(54) **VERFAHREN ZUR BEHANDLUNG VON SCHLAMM**
SLUDGE TREATMENT METHOD
PROCEDE DE TRAITEMENT DE BOUES

(30) Priorität: 22.08.2001 DE 10142823; 24.05.2002 DE 10224133
(43) Veröffentlichungstag der Anmeldung: 19.05.2004
(73) Patentinhaber: Emschergenossenschaft, 45128 Essen (DE); Volkswagen AG, 38436 Wolfsburg (DE)
(72) Erfinder: KETTELER, Reinhard, 46282 Dorsten (DE); GOLDMANN, Daniel, 38640 Gosslar (DE); DEN DUNNEN, Bram, 38446 Wolfsburg (DE); GUSCHALL, Heiner, 57271 Hilchenbach (DE)
(74) Vertreter: Geske, Kerstin
(86) Internationale Anmeldenummer: PCT/DE2002/003109
(87) Internationale Veröffentlichungsnummer: WO 2003/018488

(56) Entgegenhaltungen:
- EP-A- 0 247 285
- EP-A- 0 587 045
- PATENT ABSTRACTS OF JAPAN vol. 2000, no. 06, 22. September 2000 (2000-09-22) -& JP 2000 070895 A (TOSHIBA CORP), 7. März 2000 (2000-03-07)
- PATENT ABSTRACTS OF JAPAN vol. 009, no. 138 (C-286), 13. Juni 1985 (1985-06-13) -& JP 60 025595 A (EBARA INFILCO KK), 8. Februar 1985 (1985-02-08)

## Beschreibung

Die Erfindung betrifft ein Verfahren zur Behandlung von Schlamm, bei dem dem Schlamm leichte Kunststoffe und/oder Naturfasern als Zusatzstoff zugesetzt werden, wobei die Kunststoffe und/oder Naturfasern durch Aufbereitung eines Materialgemisches gewonnen werden.

Zum Konditionieren von Schlamm, insbesondere Faulschlamm, im Hinblick auf eine thermische Behandlung (Verwertung oder Beseitigung) ist es bekannt, den Schlamm vor einer Entwässerung auf Kammer- bzw. Membranfilterpressen mit Kohle zu konfektionieren. Hierdurch wird zum einen die Entwässerbarkeit des Schlammes durch Verbesserung der Drainage-Eigenschaften erhöht. Denn es werden Entwässerungskanäle zur Verfügung gestellt, durch die dass Wasser mit vergleichsweise geringem Druck abgeleitet werden kann. Zum anderen trägt die Kohle zur Erhöhung des Heizwertes des Schlammes auf einen Wert bei, der mindestens für eine eigenständige Verbrennung ohne Stützfeuerung erforderlich ist. Hierzu werden dem Schlamm insbesondere feuchte Steinkohle und/oder getrocknete, pulverförmige Braunkohle zugesetzt.

Die zugesetzte Kohle muss bestimmten Anforderungen genügen, um als Entwässerungshilfsmittel uns als Heizwertregulator dienen zu können. So muss die Kohle eine Korngröße von weniger als 1 mm aufweisen, mit einem Median der Körnungslinie im Bereich von 0.2 mm bis 0.5 mm. Das Korn darf eine vorgegebene Härte nicht überschreiten, um Beschädigungen an Filtertüchern bei der Schlammentwässerung zu vermeiden. Ferner müssen die Kohle bzw. das eingesetzte Kohlegemisch definierte Vorgaben bezüglich des Verbrennungsverhaltens in Kombination mit Klärschlamm erfüllen, z.B. hinsichtlich des Heizwertes und flüchtiger Bestandteile. Auch sind die zulässigen Schadstoffinhalte derart limitiert, dass das beim Prozess der Schlammentwässerung abgetrennte Filtratwasser die Zuflussbelastung bzw. Die Ablaufwerte der angeschlossenen Kläranlage nur im Rahmen vorgegebener Grenzwerte beeinflusst.

Ferner ist es bekannt, dem Schlamm Kalk als Strukturbildner hinzuzufügen, um die Förderfähigkeit des behandelten Schlammes zu verbessern, sowie dem Schlamm flüssige Polymere als Flockungsmittel zuzugeben.

Des Weiteren ist es bekannt, organische Materialien und Kunststoffe zur oder bei der Entwässerung von Schlamm einzusetzen. So beschreibt die japanische Patentanmeldung JP 60025595 ein Verfahren zum Entwässern von Schlamm, bei dem der Schlamm mit fasrigem Material in Form von Papier vermischt und anschließend durch Pressen entwässert wird.

Auch die EP 247 285 schlägt vor, dem Klärschlamm faser-, flocken- und/oder blattförmige Stoffe zuzuführen, wobei im feuchten Abfall (Schlamm) und/oder im Trockenstoff ein gewisser Anteil Kunststoff enthalten sein kann. Die organischen Zusatzstoffe sollen hier jedoch teilweise die im Schlamm enthaltene Flüssigkeit aufsaugen, so dass auf eine Press-Entwässerung verzichtet werden kann.

In der japanischen Patentanmeldung JP 2000 070 895 wird ein Verfahren zur Behandlung vorgeschlagen, bei dem dem Schlamm nach der Entwässerung Kunststoffabfälle zugeführt werden.

Zusätzlich ist der Europäischen Patentschrift EP 587 045 B1 ein Verfahren zu entnehmen, bei dem dem Schlamm unter anderem auch Kunststoffgranulat vor der Entwässerung beigegeben und mit ihm vermischt wird. Es hat sich jedoch gezeigt, dass die Beigabe von Kunststoffgranulat nicht zum gewünschten Entwässerungserfolg führt.

Dementsprechend liegt der Erfindung die Aufgabe zugrunde, ein neues Verfahren zur Behandlung von Schlamm, bei dem dem Schlamm Kunststoffe als Zusatzstoffe zugesetzt werden, zu schaffen und dadurch eine effiziente, mechanische Entwässerung im Vorfeld einer späteren thermischen Behandlung des Schlammes zu erreichen.

Diese Aufgabe wird erfindungsgemäß durch ein Verfahren mit den Merkmalen des Patentanspruchs 1 gelöst. Vorteilhafte. Aus- und Weiterbildungen sind in den Unteransprüchen dargestellt.

Erfindungsgemäß ist dabei vorgesehen, dass die Kunststoffe und/oder Naturfasern eine durch die Aufbereitung des Materialgemisches erzeugte Leichtfraktion in Form einer Flusenfraktion sind und die Leichtfraktion vor der Verwendung als in den Schlamm einzubringende Zusatzstoffe einem Agglomerationsprozess unterworfen wird.

Mit den erfindungswesentlichen Merkmalen kann erreicht werden, dass verbesserte Entwässerungskanäle im Schlamm für eine nachfolgende. Entwässerung zu Verfügung gestellt werden.

Die leichten Kunststoffe sind dabei dadurch spezifiziert, dass sie ein vorgegebenes Gewicht und/oder eine vorgegebene Dichte unterschreiten. Es handelt sich also nicht um beliebige Kunststoffe, sondern um eine Fraktion leichter Kunststoffe, die durch eine Sortierung nach Dichte und/oder Gewicht gewonnen werden kann. Diese leichten Kunststoffe können zum Teil auch durch Schaumstoffe gebildet werden, die eine poröse Struktur aufweisen. Bei den zusätzlich als Zusatzstoffen verwendeten Fasern handelt es sich insbesondere um Textilfasern.

Der erfindungsgemäße Lösung hat den Vorteil, dass zur Verbesserung der Entwässerbarkeit sowie zur Erhöhung des Heizwertes des zu behandelnden Schlammes keine primären Rohstoffe, wie z.B. Kohle, verwendet werden, sondern diese durch Sekündär-Rohstoffe ersetzt werden, die zielgerichtet aus Abfällen oder Produktionsrückständen gewonnen werden können. Die erfindungsgemäß als Zusatzstoff verwendeten leichten Kunststoffe, Naturfasern, insbesondere Textilfasern, können z.B. bei er Aufbereitung kunststoffhaltiger Abfälle bzw. bei der Aufbereitung von Rückständen aus der Textilproduktion separiert werden. Im Ergebnis werden diese Abfälle einer Verwertung zugeführt und es erübrigt sich der Einsatz primärer Rohstoffe wie Stein- oder Braunkohle. Allerdings können letztere im Rahmen des erfindungsgemäßen Verfahrens ergänzend in den Schlamm eingebracht werden, ebenso wie Kalk und flüssige Polymere.

Zusätzlich können in den Schlamm als Zusatzstoffe auch organische Materialien eingebracht werden, die aus Abfällen aus dem sogenannten Post-Consumer-Bereich, also nach der Nutzungsphase durch den Verbraucher, sowie aus Abfällen (auch Produktionsrückständen) aus der Industrieproduktion erzeugt werden. Diese Abfälle müssen in der Regel vor dem Einbringen in den Schlamm aufbereitet werden.

Gemäß einer bevorzugten Ausführungsform der Erfindung werden die Zusatzstoffe durch Aufbereitung sogenannter Shredder-Rückstände gewonnen, die z.B. beim Shreddern von Kraftfahrzeugen (Kraftfahrzeugrecycling) entstehen. Nach dem Abtrennen des aus schweren, ferromagnetischen Teilen bestehenden sogenannten Shredder-Schrottes enthalten diese Shredder-Rückstände große Mengen leichter Kunststoffe sowie an Textilien, die beispielsweise zur Gestaltung des Innenraumes von Kraftfahrzeugen verwendet wurden.

Unabhängig davon, aus welcher Art Materialgemisch die in den Schlamm einzubringenden Zusatzstoffe gewonnen werden, besteht das Ziel darin, aus dem aufzubereitenden Materialgemisch eine Leichtfraktion, insbesondere in Form einer Flusenfraktion, als Zusatzstoffe zu gewinnen. Die Leichtfraktion wird hierbei durch eine Trennung des Materialgemisches nach Dichte und/oder Gewicht in eine Leichtfraktion und eine Schwerfraktion erzeugt. Bei Verwendung geeigneter Kriterien für die Trennung nach Dichte und/oder Gewicht lässt sich erreichen, dass die Leitfraktion gerade die leichten Kunststoffe und Naturfasern enthält, die als Zusatzstoffe in den zu behandelnden Schlamm eingebracht werden sollen.

Als Verfahren zur Trennung des Materialgemisches in eine Leichtfraktion und eine Schwerfraktion eignen sich insbesondere eine Wiridsichtung oder das Absaugen der Leichtfraktion. Da hierbei jeweils Luft als Trennmedium verwendet wird, ermöglicht dies eine Dichtetrennung ohne nasse Aufbereitungsstufen. Die Trennung kann aber auch mit nassen Verfahren zum Sortieren nach Dichte und/oder Gewicht durchgeführt werden, z.B. durch Verwendung eines Schwimm-Sink-Scheiders oder eines Hydrozyklons.

Im Ergebnis werden bei er Trennung eines Materialgemisches nach Dichte und/oder Gewicht solche Partikel, die ein bestimmtes Gewicht und/oder eine bestimmte Dichte überschreiten, als Schwerfraktion aussortiert und die anderen Stoffe, insbesondere leichte Kunststoffe und Textilien in Form von Flusen der Leichtfraktion zugeschlagen.

Die Trennung des Materialgemisches in eine Leichtfraktion und eine Schwerfraktion kann dabei grundsätzlich wahlweise nach Dichte oder Gewicht erfolgen. Allerdings ist auch eine Kombination dieser Sortierschritte denkbar, so dass beispielsweise nur Stoffe, die ein bestimmtes Gewicht und eine bestimmte Dichte überschreiten, der Schwerfraktion zugerechnet werden. Ferner ist zu beachten, dass sich in der Praxis, z.B. bei einer Windsichtung, das Sortieren nach Dichte und Gewicht in der Regel nicht eindeutig voneinander trennen lässt.

Das zur Gewinnung der Zusatzstoffe aufzubereitende Materialgemisch enthält in der Regel eine Reihe von Bestandteilen, die vor der Trennung des Materialgemisches in eine Leicht- und eine Schwerfraktion abgetrennt werden müssen. Hierzu werden aus dem Materialgemisch insbesondere ferromagnetische Stoffe und/oder Nichteinsen-Metalle und/oder Sand und/oder Granulat abgetrennt (mechanische Separation der beim Shreddern entstehenden Hauptströme).

Die mit den vorgenannten Verfahrensschritten letztlich gewonnene Leichtfraktion wird bei Verfahren zur Aufbereitung der die Kunststoffe und Naturfasernenthaltenden Shredderfraktion, z.B. aus dem Kraftfahrzeugrecycling, als Shredderflusen bezeichnet. Sie besteht überwiegend aus Schaumkunststoffen (PUR-Schäumen), aus Naturfasern (insbesondere Textilfasern) sowie sehr dünnen Kunststoffen. Weitere Einzelheiten zur Erzeugung einer derartigen Leicht- bzw. Flusenfraktion können der DE 100 53 487 A1 entnommen werden.

Allerdings sind in der Leicht- bzw. Flusenfraktion regelmäßig noch Kupferlitzen und andere Störstoffe enthalten, die vor der Verwertung der Shredderflusen zur Konditionierung von Schlamm abgetrennt werden müssen. Dementsprechend wird die Leicht- bzw. Flusenfraktion vor dem Einbringen in den zu konditionierenden Schlamm veredelt, z.B., indem aus der Leichtfraktion Metalldrähte und -litzen und/oder metallhaltiger Staub abgetrennt werden, wobei die Metalldrähte und -litzen vor der Abtrennung verkugelt werden können. Hierzu ist es vorteilhaft, die Leichtfraktion, 5 insbesondere in einer Pralltellermühle, durch Prall und/oder Schlag zu behandeln, wobei eine Verkugelung der Metalldrähte und -litzen erreicht wird. Die Kunststoff- und Naturfaserbestandteile (Flusen) bleiben demgegenüber während der Beanspruchung durch Prall und/oder Schlag im wesentlichen unverändert; allerdings wird an diesen Bestandteilen anhaftender Staub abgeschlagen, der anschließend abgesaugt werden kann. Im Ergebnis werden also durch die Behandlung des zur Gewinnung von Zusatzstoffen für die Konditionierung von Schlamm aufzubereitenden Materialgemisches plastisch verformbare Teile, insbesondere Metalllitzen und -drähte, verkugelt und elastische Teile, insbesondere leichte Kunststoffe und Naturfasern, unverändert gelassen, wobei letztere jedoch von anhaftendem Staub befreit werden.

Weitere Einzelheiten zu einer derartigen Veredelung von Shredderflusen und dergleichen können der DE, 100 53 491 A1 entnommen werden.

In einem abschließenden Verfahrensschritt erfolgt dann die physikalische Aufbereitung der leichten Kunststoffe und Naturfasern, die als Zusatzstoffe in den zu behandelnden Schlamm eingebracht werden sollen, durch Agglomeration. Hierbei soll die Faserlänge von Flusen und die Partikelgröße sonstiger leichter Kunststoffe, insbesondere von Schaumstoffteilchen, so eingestellt werden, dass folgende Eigenschaften der so gewonnenen Zusatzstoffe optimiert werden:
- Die Einmischeigenschaften der Zusatzstoffe in den zu behandelnden Schlamm sollen durch hinreichend schnelle Benetzung und Homogenisierung optimiert werden.
- Es soll eine besonders gute Entwässerungs- und Drainagewirkung in einer Membranfilterpresse aufgrund hinreichender Kanalbildung erreicht werden.
- Die Austrags-, Lager- und Fördereigenschaften des Austrags der Filterpresse sollen sich durch gute Riesel-Eigenschaften, Vermeidung von "Brett-Bildung" aufgrund zu langer Fasern, eine nur geringe erneute Durchfeuchtbarkeit sowie zeitliche Formbeständigkeit auszeichnen.

Die Parameter der Agglomeration werden vorzugsweise derart eingestellt, dass die Faserlänge der in dem zur Gewinnung der Zusatzstoffe aufzubereitenden Materialgemisch überwiegend zwischen 0,5 mm und 5 mm liegt. Der Agglomerator arbeitet dabei vorzugsweise als geschlossenes System, d.h., Dämpfe, die während der Trocknungsphase oder der Abschreckphase entstehen, werden einem geschlossenen Abluftsystem zugeführt. Ferner kann der Materialaustrag des Agglomerators mit einer Absaugung versehen sein.

Die gemäß dem vorstehend erläuterten Verfahren gewonnenen, in den Schlamm einzubringenden Zusatzstoffe (Shredderflusenagglomerat) weisen vorzugsweise einen Heizwert von mindestens 10 000 kJ/kg, einen Chlorgehalt von höchstens 3 % sowie einen Zinkgehalt von höchstens 1 % auf. Der Kupfergehalt sollte höchstens 1 %, vorzugsweise höchstens 0,5 % und besonders bevorzugt höchstens 0,3 % betragen. Des weiteren müssen die Zusatzstoffe geeignet sein, bei entsprechender Zudosierung zum Schlamm ein für die nachgeschaltete Verbrennung angepasstes, optimales Verhältnis zwischen Heizwert, Wassergehalt und Aschegehalt im konditionierten und entwässerten Schlamm herzustellen. Dabei sollte der Heizwert zwischen 4,2 MJ/kg und 4,6 MJ/kg; der Wassergehalt zwischen 55 % und 60 % (entsprechend einem Gehalt an Trockensubstanz zwischen 40 % und 45 %) und der Aschegehalt der Trockensubstanz zwischen 38 % und 50 % liegen, wobei die Angaben jeweils von Gewichts-% ausgehen. Darüber hinaus wird gefordert, dass der konditionierte und entwässerte Schlamm auch nach längerer Lagerung im Freien keine unakzeptabel hohen Mengen an Feuchtigkeit neu aufnehmen kann und dass die Förderfähigkeit für den Nachfolgeprozess sowohl für frisch erzeugtes als auch für länger gelagertes Material gegeben ist. Die Aufbereitung des Materialgemisches, aus dem die in den Schlamm einzubringenden Zusatzstoffe gewonnen werden sollen, ist demnach so einzustellen, dass die vorstehend aufgeführten Parameter und Vorgaben erreicht werden.

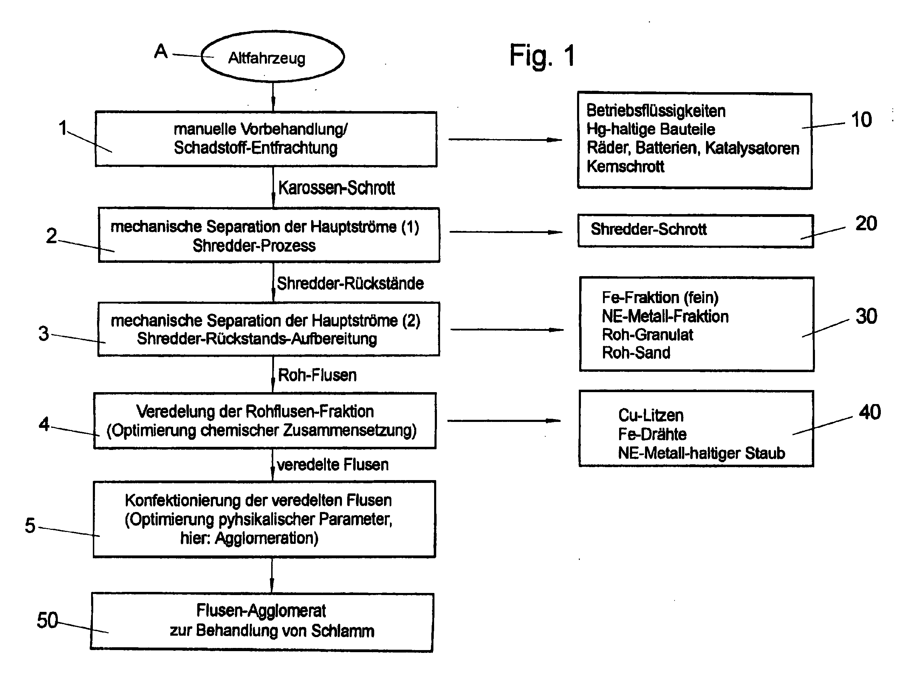

Weitere Merkmale und Vorteile der Erfindung werden bei der nachfolgenden Beschreibung unterschiedlicher Ausführungsbeispiele der Erfindung deutlich werden. Hierbei zeigt Figur 1 ein Flussdiagramm eines ersten Ausführungsbeispieles der Erfindung.

Gemäß dem in Figur 1 dargestellten Ausführungsbeispiel der Erfindung sollen Zusatzstoffe zur Konditionierung von Schlamm bei der Aufbereitung von Altfahrzeugen (Kraftfahrzeugrecycling) gewonnen werden. Hierzu werden die Altfahrzeuge A in einem ersten Verfahrensschritt 1 einer manuellen Vorbehandlung und Schadstoff-Entfrachtung unterzogen, bei der z.B. Betriebsflüssigkeiten, quecksilberhaltige Bauteile, Räder, Batterien, Katalysatoren und Kernschrott als eine Fraktion 10 aussortiert werden: Hierdurch soll das aufzubereitende Material (Altfahrzeuge) im Hinblick auf die nachfolgenden Prozesse, Produkte und Emissionen von Schadstoffen befreit werden.

Der verbleibende sogenannte Karossen-Schrott wird in einem zweiten Verfahrensschritt 2 zur Separation der Hauptströme einem Shredder-Prozeß unterzogen und aus dem geshredderten Material große, eine magnetische Fraktion als Shredder-Schrott 20 entnommen. Die verbleibenden Shredder-Rückstände werden nun in einem dritten Verfahrensschritt 3 einer weiteren mechanischen Separation der Hauptströme unterzogen, mit dem Ziel durch Aufbereitung der Shredder-Rückstände eine sogenannte Rohflusen-Fraktion zu gewinnen. Hierzu werden insbesondere Eisenmetalle, Nichteisenmetalle, Granulat und Sand 30 aus den Shredder-Rückständen separiert. Einzelheiten hierzu können der DE 100 53 487 entnommen werden.

Die im dritten Verfahrensschritt 3 gewonnenen Rohflusen werden in einem weiteren Verfahrensschritt 4 hinsichtlich ihrer chemischen Zusammensetzung optimiert und dadurch veredelt. Hierzu werden durch Beanspruchung des aufzubereitenden Materials mittels Prall und/oder Schlag, z.B. in einer Pralltellermühle, Metalldrähte und -litzen verkugelt sowie metallhaltiger Staub von Flusen und sonstigen Kunststoffteilchen abgeschlagen. Die verkugelten Metalldrähte und -litzen sowie der metallhaltige Staub 40 wird anschließend aus dem aufzubereitenden Material abgetrennt. Einzelheiten hierzu können der DE 100 53 491 A1 entnommen werden.

Es geht also bei der Veredelung der Rohflusen-Fraktion um eine zielgerichtete Optimierung der chemischen Eigenschaften im Hinblick auf den Anwendungszweck (Klärschlammkohditionierung zur thermischen Behandlung) durch spezifische Störstoffausschleusung. Die so gewonnene veredelte Flusen-Fraktion enthält insbesondere Kunststoff- und Naturfasern sowie Kunststoffteilchen, insbesondere aus Schaumstoff. Zur Optimierung der physikalischen Eigenschaften dieser Fraktion im Hinblick auf den Anwendungszweck werden diese Flusen in einem letzten Verfahrensschritt 5 konfektioniert, beispielsweise durch Agglomeration. Hierbei sollen insbesondere die Faserlänge im Hinblick auf den Anwendungszweck optimiert werden, indem eine Faserlänge von 0,5mm bis 5 mm angestrebt wird.

Das hierdurch gewonnene Flusen-Agglomerat 50 wird in einem Mischbehälter mit dem zu konditionierenden Klärschlamm gemischt. Die veredelte Leichtfraktion kann hierzu in einfacher Weise mit Lastkraftwagen zu dem Mischbehälter transportiert und dann in den Behälter gekippt werden. Es kann jedoch auch ein Transport mittels Silofahrzeugen und eine Zuführung zu den Mischbehältern über Schläuche erfolgen.

Durch den Zusatz der veredelten Leichtfraktion (Shredderflusen) soll beispielsweise bei einem Faulschlamm mit einem Feststoffgehalt von ca. 4 %, einem Heizwert von 10 000 kJ/kg im getrockneten Zustand und einem Aschegehalt von 54 % erreicht werden, dass der erzeugte Brennstoff ohne thermische Trocknungsschritte einen Heizwert von ca. 4 400 kJ/kg, einen Aschegehalt von weniger als 50 % und einen TR-Gehalt (Gehalt an Trockensubstanz) im entwässerten Schlamm von 42 % bis 45 % aufweist.

Eine andere Möglichkeit der Gewinnung von Zusatzstoffen zur Konditionierung von Klärschlamm besteht gemäß einem weiteren Ausführungsbeispiel der Erfindung in der Aufbereitung eines Kunststoffgemisches, das z.B. aus Haushaltsmüll stammen kann, wobei zur Gewinnung leichter Kunststoffe eine Trennung des Gemisches in eine Leichtfraktion und eine Schwerfraktion nach Dichte und/oder Gewicht erfolgt. Dabei ist in der Praxis, z.B. bei einer Windsichtung, das Sortieren nach Dichte und Gewicht häufig nicht eindeutig voneinander unterscheidbar, Im Ergebnis werden bei der Trennung des Kunststoffgemisches nach Dichte und/oder Gewicht solche Partikel, die ein bestimmtes Gewicht und/oder eine bestimmte Dichte überschreiten, als Schwerfraktion aussortiert und die anderen Kunststoffe der Leichtfraktion zugeschlagen. Diese Sortierung kann beispielsweise mittels einer Windsichtung, durch Absaugen der Leichtfraktion, mittels eines Schwimm-Sink-Scheiders oder eines Hydrozyklons erfolgen.

Vor der Trennung des Kunststoffgemisches in eine Leichtfraktion und eine Schwerfraktion werden noch vorbereitende Verfahrensschritte durchgeführt, z.B. das Aussortieren magnetischer Stoffe mittels eines Magnetabscheiders, das Zerkleinern sehr großer Kunststoffbestandteile durch Schnitt, Schlag und/oder Prall sowie das Absieben sehr kleiner Bestandteile des Gemisches, z.B. von Inertstoffen, auf einer Feinsiebstrecke. Einzelheiten hierzu sind in WO 98/01276 A1, DE 196 29 470 A1 sowie DE 196 29 473 beschrieben.

Zur weiteren Aufbereitung der Leichtfraktion eignen sich Verfahrensschritte, wie sie oben im Zusammenhang mit der Aufbereitung der Shredderflusen, aus dem Kraftfahrzeugrecycling bereits beschrieben worden sind. So wird gemäß einer Variante die Leichtfraktion zur Veredelung einer Vorrichtung zur Behandlung der Leichtfraktion durch Prall und/oder Schlag, z.B. einer Pralltellermühle zugeführt. Die Zuführung erfolgt vorzugsweise pneumatisch, gegebenenfalls unter Vorschaltung eines Kupferbehälters mit dosiertem mechanischen Austrag. Die Behandlung durch Prall und/oder Schlag hat die Funktion, die aus sehr weichen Materialien bestehende Leichtfraktion derart mechanisch zu beanspruchen, dass die enthaltenen Metalldrähte und -litzen verkugeln, während die Kunststoffbestandteile (Flusen) im wesentlichen unverändert bleiben. Die mechanische Beanspruchung führt weiterhin dazu, dass an den Künststoffbestandteilen anhaftender Staub abgeschlagen wird.

Weitere Einzelheiten hinsichtlich der Gewinnung, Behandlung und Veredelung von Flusen, insbesondere Shredderflusen, sind in DE 100 53 487 A1, DE 100 53 481 A1, DE 100 53 491 A1 und DE 100 53 492 A1 beschrieben.

Nach der Prallbeanspruchung kann eine weitere mechanische Aufbereitung mit folgenden Verfahrensschritten erfolgen:
- Die Kunststoffbestandteile (Flusen) werden, ggf. über ein Puffersilo, einer Siebanlage zugeführt; die z.B. durch Vibrationssiebe oder Trommelsiebe gebildet wird und die vorzugsweise eine Siebbespannung von 3 mm bis 6 mm, insbesondere 5 mm aufweist.
- Der Siebüberlauf, also die größeren Bestandteile des Gemisches, bilden die sogenannte "Gutfrakfion", d.h. Kunststoffbestandteile ohne Kupferlitzen. Der Siebunterlauf, d.h. die kleineren Bestandteile, werden mechanisch, pneumatisch oder im freien Fall einem Dichtesortierer zugeführt, der z.B. als Lufttrenntisch ausgebildet sein kann.
- Mittels des Lufttrenntisches erfolgt eine Trennung des Siebunterlaufs in eine sehr leichte Staubfraktion, die schon beim Eintritt in den Dichtesortierer abgesaugt wird, sowie in sonstiges Leichtgut und Schwergut.
- Das hierbei gewonnene Schwergut enthält vor allem die Kupferlitzen. Es wird nochmals einer Eisenmetall-Abscheidung, vorzugsweise unter Verwendung eines Neodym-Magneten, unterzogen, um Eisen und Edelstahlbestandteile von der Kupferfraktion zu trennen.
- Das mittels des Lufttrenntisches erzeugte Leichtgut enthält vorwiegend Kunststoffbestandteile (Shredderflusen ohne Kupferlitzen und ohne Staub) und wird mit dem Überlauf aus der Siebstufe zusammengeführt.

Die Shredderflusen können nun noch weiter aufbereitet werden, z.B. durch Zerkleinerung mittels einer Schneidmühle, durch Agglomeration zur Überführung in einen rieselfähigen Zustand, durch Pelletieren, vorzugsweise mit einer Matritzenlochung einer Größe zwischen 3 mm und 10 mm, sowie ggf. durch Brikettieren.

Gemäß einer anderen Variante wird die Leichtfraktion aus der Kunststoffaufbereitung zur Veredelung (über ein Puffersilo) einem Agglomerator zugeführt, in dem wahlweise eine kontinuierliche Agglomeration mittels sogenannter Scheibenverdichter oder eine diskontinuierliche Agglomeration erfolgen kann. Dem Agglometator können dabei noch eine Eisenmetall-Abscheidung mittels Überband- oder Trommelmagnet oder auch ein Allmetall-Abscheider vorgeschaltet sein. Die Agglomeration selbst wird betrieben, bis eine rieselfähige Struktur der aufzubereitenden Leichtfraktion (Shredderflusen) erreicht ist. Der Agglomerator arbeitet vorzugsweise als geschlossenes System, d.h. Dämpfe, die während der Trocknungsphase oder der Abschreckphase entstehen, werden einem geschlossenen Abluftsystem zugeführt.

Dem Materialaustrag des Agglomerators können die folgenden weiteren Aufbereitungsstufen nachgeschaltet sein:
- eine Siebstufe zur Absiebung nicht agglomerierter oder durch fehlerhafte Prozessführung verklumpter Teile. Hierzu wird der Materialaustrag einer Siebstrecke mit einer Lochgröße von vorzugsweise 2 mm bis 4 mm zugeführt. Das Sieb kann unmittelbar in die Materialaustragsstrecke integriert sein.
- Darüber hinaus kann der Materialaustrag des Agglomerators einer weiteren Eisenmetall-Abscheidung unterzogen werden.
- Der Materialaustrag wird dann pneumatisch einem Lagersilo oder einer Verpackungsvorrichtung zugeführt, wobei die pneumatische Förderung so eingestellt ist, dass hierbei eine Materialabkühlung auf Umgebungstemperatur erfolgt. Dies kann durch eine Temperaturmessung überprüft werden, um eine Selbstentzündung des Materials im Lagersilo oder der Verpackungsvorrichtung zu vermeiden.

Anstelle der Agglomeration ist auch eine Behandlung der Leichtfraktion mittels einer Schneidmühle denkbar.

Die vorstehend beschriebenen Varianten zur Veredelung und weiteren Behandlung der bei der Aufbereitung von Materialgemischen gewonnenen Leichtfraktion, insbesondere Shredderleichtfraktion (Shredderflusen) eröffnen neben deren Verwendung zur Erhöhung des Heizwertes von Schlamm noch andere Verwertuhgsmögtichkeiten. So kann eine werkstoffliche Verwertung zu Verbundschaum, eine Verwertung als Reduktionsmittel in Hochöfen oder als Brennstoff in Kraftwerken (nach Mischung mit Kohlestaub) oder eine Verwertung als Zusatz in Kokereien vorgesehen sein.

Werden die in der vorstehenden Weise gewonnenen Zusatzstoffe zur Konditionierung von Schlamm, insbesondere Faul-, Klär- bzw. Rohschlamm verwendet, so kann dieser dann als Brennstoff in der Schlammverbrennung genutzt werden.

## Patentansprüche

1. Verfahren zur Behandlung von Schlamm, bei dem dem Schlamm leichte Kunststoffe und/oder Naturfasern als Zusatzstoffe zugesetzt werden, wobei die Kunststoffe und/oder Naturfasern durch Aufbereitung eines Materialgemisches gewonnen werden, **dadurch gekennzeichnet, dass** die Kunststoffe und/oder Naturfasern eine durch die Aufbereitung des Materialgemisches erzeugte Leichtfraktion in Form einer Flusenfraktion sind und die Leichtfraktion vor der Verwendung als in den Schlamm einzubringende Zusatzstoffe einem Agglomerationsprozess unterworfen wird.

2. Verfahren nach Anspruch 1, **dadurch gekennzeichnet, dass** die in den Schlamm einzubringenden Zusatzstoffe zumindest teilweise faserig sind.

3. Verfahren nach einem der Ansprüche 1 bis 2, **dadurch gekennzeichnet, dass** die in den Schlamm einzubringenden Zusatzstoffe zumindest teilweise poröse Materialien sind.

4. Verfahren nach einem der Ansprüche 1 bis 3, **dadurch gekennzeichnet, dass** dem Schlamm als Zusatzstoffe zusätzlich organische Materialien zugeführt werden.

5. Verfahren nach einem der Ansprüche 1 bis 4, **dadurch gekennzeichnet, dass** die Zusatzstoffe dem Schlamm vor der Entwässerung des Schlammes zugeführt werden.

6. Verfahren nach einem der Ansprüche 1 bis 5, **dadurch gekennzeichnet, dass** die in den Schlamm einzubringenden Zusatzstoffe zumindest teilweise aus Abfällen stammen.

7. Verfahren nach einem der Ansprüche 1 bis 6, **dadurch gekennzeichnet, dass** die Zusatzstoffe durch Aufbereitung von Shredder-Rückständen gewonnen werden.

8. Verfahren nach Anspruch 7, **dadurch gekennzeichnet, dass** aus den Shredder-Rückständen schwere, ferromagnetische Teile als Shredder- Schrott abgetrennt werden.

9. Verfahren nach Anspruch 7 oder 8, **dadurch gekennzeichnet, dass** zur Gewinnung der Leichtfraktion aus dem Materialgemisch ferromagnetische Stoffe, Nichteisen-Metalle, Sand und/oder Granulat abgetrennt werden.

10. Verfahren nach einem der Ansprüche 1 bis 9, **dadurch gekennzeichnet, dass** die Leichtfraktion vor dem Einbringen in den Schlamm veredelt wird.

11. Verfahren nach Anspruch 10, **dadurch gekennzeichnet, dass** aus der Leichtfraktion Metalldrähte und -litzen und/oder metallhaltiger Staub abgetrennt werden.

12. Verfahren nach Anspruch 11, **dadurch gekennzeichnet, dass** die Metalldrähte und -lizten vor der Abtrennung verkugelt werden.

13. Verfahren nach einem der Ansprüche 10 bis 12, **dadurch gekennzeichnet, dass** die Leichtfraktion durch Prall und/oder Schlag behandelt wird.

14. Verfahren nach einem der Ansprüche 1 bis 13, **dadurch gekennzeichnet, dass** die Faserlänge der in der Leichtfraktion enthaltenen Fasern überwiegend zwischen 0,5 mm und 5 mm liegt.

15. Verfahren nach einem der Ansprüche 1 bis 14, **dadurch gekennzeichnet, dass** die in den Schlamm einzubringenden Zusatzstoffe in ihrer Gesamtheit einen Heizwert von Mindestens 10.000kJ/kg und/oder einen Chlorgehalt von höchstens 3 % und/oder einen Zinkgehalt von höchstens 1 % aufweisen.

16. Verfahren nach einem der Ansprüche 1 bis 15, **dadurch gekennzeichnet, dass** die in den Schlamm einzubringenden Zusatzstoffe in ihrer Gesamtheit einen Kupfergehalt von höchstens 1%, vorzugsweise höchstens 0,5%, besonders bevorzugt höchstens 0,3%, aufweisen.

17. Verfahren nach einem der Ansprüche 1 bis 16, **dadurch gekennzeichnet**, das der zu behandelnde Schlamm nach dem Einbringen der Zusatzstoffe im Hinblick auf den Heizwert, den Aschgehalt und den Wassergehalt derart konditioniert und entwässert ist, dass die Verwertung des Schlammes in einer nach geschalteten thermischen Behandlungsanlage durch Verbrennen ohne Zufuhr von Zusatzfeuerungsmitteln möglich ist.

18. Verfahren nach einem der Ansprüche 1 bis 17, **dadurch gekennzeichnet, dass** der konditionierte und entwässerte Schlamm einen Heizwert zwischen 4.2 MJ/kg und 4.6MJ/kg und/oder einen Wassergehalt zwischen 55% und 60% und/oder einen Aschegehalt in der Trockensubstanz zwischen 38% und 50% aufweist.

19. Verfahren nach einem der Ansprüche 1 bis 18, **dadurch gekennzeichnet, dass** die Zusatzstoffe dem Schlamm in einem Mischbehälter zugeführt werden.

20. Verfahren nach einem der Ansprüche 1 bis 19, **dadurch gekennzeichnet, dass** als Naturfasern Textilfasern verwendet werden.

21. Verfahren nach Anspruch 20, **dadurch gekennzeichnet, dass** die Textilfasern durch Abfälle aus der Textilproduktion gebildet werden.

## Claims

1. Method for the treatment of sludge, according to which light-weight plastic materials and/or natural fibres are added as additives, with the plastic materials and/or natural fibres being obtained by processing a material mixture, **characterized in that** the plastic materials and/or natural fibres are a light fraction in form of a lint fraction resulting from the processing of the material mixture and the light fraction is subjected to an agglomeration process prior to being used as additives to be introduced into the sludge.

2. Method according to Claim 1, **characterized in that** the additives to be introduced into the sludge are at least partially fibrous.

3. Method according to one of Claims 1 to 2, **characterized in that** the additives to be introduced into the sludge are at least partially porous materials.

4. Method according to one of Claims 1 to 3, **characterized in that** organic materials are additionally added as additives to the sludge.

5. Method according to one of Claims 1 to 4, **characterized in that** the additives are added to the sludge prior to dewatering the sludge.

6. Method according to one of Claims 1 to 5, **characterized in that** the additives to be introduced into the sludge originate at least partially from waste materials.

7. Method according to one of Claims 1 to 6, **characterized in that** the additives are obtained by processing shredder residues.

8. Method according to Claim 7, **characterized in that** heavy, ferromagnetic parts are separated from the shredder residues as shredder scrap.

9. Method according to Claim 7 or 8, **characterized in that** for obtaining the light fraction, ferromagnetic materials, non-ferrous metals, sand and/or granules are separated from the material mixture.

10. Method according to one of Claims 1 to 9, **characterized in that** the light fraction is refined prior to being introduced into the sludge.

11. Method according to Claim 10, **characterized in that** metal wires and metal cords and/or metal-containing dust are separated from the light fraction.

12. Method according to Claim 11, **characterized in that** the metal wires and metal cords are spherified prior to the separation.

13. Method according to one of Claims 10 to 12, **characterized in that** the light fraction is treated by way of impact and/or shock.

14. Method according to one of Claims 1 to 13, **characterized in that** the fibre length of the fibres contained in the light fraction is predominantly between 0.5 mm and 5 mm.

15. Method according to one of Claims 1 to 14, **characterized in that** the additives to be introduced into the sludge have an overall calorific value of at least 10 000 kJ/kg and/or a chlorine content of not greater than 3% and/or a zinc content of not greater than 1%.

16. Method according to one of Claims 1 to 15, **characterized in that** the additives to be introduced into the sludge have an overall copper content of not greater than 1%, preferably not greater than 0.5%, particularly preferably not greater than 0.3%.

17. Method according to one of Claims 1 to 16, **characterized in that**, subsequent to the introduction of the additives, the sludge to be treated is, with respect to the calorific value, the ash content and the water content, conditioned and dewatered in such a way that the utilization of the sludge in a downstream thermal treatment plant is possible by combustion without introducing additional fuel.

18. Method according to one of Claims 1 to 17, **characterized in that** the conditioned and dewatered sludge has a calorific value of between 4.2 MJ/kg and 4.6 MJ/kg and/or a water content of between 55% and 60% and/or an ash content in the dry matter of between 38% and 50%.

19. Method according to one of Claims 1 to 18, **characterized in that** the additives are added to the sludge in a mixing container.

20. Method according to one of Claims 1 to 19, **characterized in that** textile fibres are used as natural fibres.

21. Method according to Claim 20, **characterized in that** the textile fibres are made from waste materials from the textile production.

## Revendications

1. Procédé de traitement de boue, lors duquel on ajoute à la boue des matières synthétiques et/ou des fibres naturelles légères en tant qu'additifs, les matières synthétiques et/ou les fibres naturelles étant obtenues par apprêt d'un mélange de matériaux, **caractérisé en ce que** les matières synthétiques et/ou les fibres naturelles sont une fraction légère produite par l'apprêt du mélange de matériaux sous la forme d'une fraction de peluchage, et **en ce que** la fraction légère est soumise, avant l'utilisation en tant qu'additifs à introduire dans la boue, à un processus d'agglomération.

2. Procédé selon la revendication 1, **caractérisé en ce que** les additifs à introduire dans la boue sont au moins partiellement fibreux.

3. Procédé selon l'une quelconque des revendications 1 à 2, **caractérisé en ce que** les additifs à introduire dans la boue sont des matériaux au moins partiellement poreux.

4. Procédé selon l'une quelconque des revendications 1 à 3, **caractérisé en ce que** l'on ajoute en outre à la boue, en tant qu'additifs, des matériaux organiques.

5. Procédé selon l'une quelconque des revendications 1 à 4, **caractérisé en ce que** l'on ajoute les additifs à la boue avant la déshydratation de la boue.

6. Procédé selon l'une quelconque des revendications 1 à 5, **caractérisé en ce que** les additifs à introduire dans la boue proviennent au moins partiellement de déchets.

7. Procédé selon l'une quelconque des revendications 1 à 6, **caractérisé en ce que** les additifs sont obtenus par apprêt de résidus de déchiqueteurs.

8. Procédé selon la revendication 7, **caractérisé en ce que** l'on enlève des résidus de déchiqueteurs, par séparation, les pièces lourdes ferro-magnétiques en tant que ferraille de déchiqueteurs.

9. Procédé selon la revendication 7 ou 8, **caractérisé en ce qu'**en vue de l'obtention de la fraction légère à partir du mélange de matériaux, on sépare les susbtances ferro-magnétiques, les métaux non ferreux, le sable et/ou les granulés.

10. Procédé selon l'une quelconque des revendications 1 à 9, **caractérisé en ce que** la fraction légère est affinée avant l'introduction dans la boue.

11. Procédé selon la revendication 10, **caractérisé en ce que** l'on sépare de la fraction légère les fils et les torons métalliques et/ou la poussière contenant des métaux.

12. Procédé selon la revendication 11, **caractérisé en ce que** les fils et les torons métalliques sont mis sous forme de billes avant la séparation.

13. Procédé selon l'une quelconque des revendications 10 à 12, **caractérisé en ce que** la fraction légère est traitée à l'aide d'impacts et/ou de chocs.

14. Procédé selon l'une quelconque des revendications 1 à 13, **caractérisé en ce que** la longueur de fibres des fibres contenues dans la fraction légère se situe essentiellement entre 0,5 mm et 5 mm.

15. Procédé selon l'une quelconque des revendications 1 à 14, **caractérisé en ce que** les additifs à introduire dans la boue présentent dans leur totalité une valeur calorifique d'au moins 10 000 kJ/kg et/ou une teneur en chlore d'au plus 3 % et/ou une teneur en zinc d'au plus 1 %.

16. Procédé selon l'une quelconque des revendications 1 à 15, **caractérisé en ce que** les additifs à introduire dans la boue présentent dans leur totalité une teneur en cuivre d'au plus 1 %, de préférence d'au plus 0,5 %, de manière particulièrement préférée d'au plus 0,3 %.

17. Procédé selon l'une quelconque des revendications 1 à 16, **caractérisé en ce que** la boue à traiter est conditionnée et déshydratée après l'introduction des additifs pour ce qui est de la valeur calorifique, de la teneur en cendres et de la teneur en eau, de telle sorte que la revalorisation de la boue dans une installation de traitement thermique placée à la suite par combustion sans apport d'agents combustibles additionnels soit possible.

18. Procédé selon l'une quelconque des revendications précédentes 1 à 17, **caractérisé en ce que** la boue conditionnée et déshydratée présente une valeur calorifique comprise entre 4,2 MJ/kg et 4,6 MJ/kg et/ou une teneur en eau comprise entre 55 % et 60 % et/ou une teneur en cendres dans la substance sèche comprise ente 38 % et 50 %.

19. Procédé selon l'une quelconque des revendications 1 à 18, **caractérisé en ce que** les additifs sont ajoutés à la boue dans un récipient de mélange.

20. Procédé selon l'une quelconque des revendications 1 à 19, **caractérisé en ce que** l'on utilise, en tant que fibres naturelles, des fibres textiles.

21. Procédé selon la revendication 20, **caractérisé en ce que** les fibres textiles sont formées à partir de déchets provenant de la production textile.
